# EUROPEAN PATENT SPECIFICATION

(11) **EP 3 774 553 B1**
(45) Date of publication and mention of the grant of the patent: **19.01.2022**
(21) Application number: 19721127.9
(22) Date of filing: 03.04.2019
(51) Int. Cl.: B65B 35/36, B65B 5/08, B65B 35/58, B65B 59/00, B65B 29/02, B65G 17/40, B65G 47/90

(54) **UNIT AND METHOD FOR TRANSFERRING SINGLE-USE CONTAINERS**
EINHEIT UND VERFAHREN ZUM ÜBERFÜHREN VON EINWEGBEHÄLTERN
UNITÉ ET PROCÉDÉ DE TRANSFERT DE CONTENANTS À USAGE UNIQUE

(30) Priority: 04.04.2018 IT 201800004184
(43) Date of publication of application: 17.02.2021
(73) Proprietor: I.M.A. Industria Macchine Automatiche S.p.A., 40064 Ozzano dell'Emilia (BO) (IT)
(72) Inventor: ATRIGNA, Maurizio, 40069 Zola Predosa (Bologna) (IT); CASTELLARI, Pierluigi, 40069 Zola Predosa (Bologna) (IT); MINARELLI, Massimiliano, 40069 Zola Predosa (Bologna) (IT)
(74) Representative: Milli, Simone
(86) International application number: PCT/IB2019/052712
(87) International publication number: WO 2019/193506

(56) References cited:
- WO-A1-2013/134885
- WO-A1-2014/136015
- WO-A1-2016/088023
- WO-A1-2017/163166
- US-A1- 2013 115 033

## Description

### Technical field

This invention relates to the field of packaging of single-use containers containing a dose of preparation for food products (in particular for beverages), for example pods or capsules for coffee, tea or other preparations for extraction.
in particular, the invention relates to a unit for transferring single-use containers containing a dose of food preparation, a relative transfer method and a packaging machine comprising the above-mentioned transfer unit.

### Background art

The diffusion of single-use capsules and pods in particular for extraction beverages is in continuous expansion thanks to the speed, convenience and simplicity of use of these type of products, which are particularly appreciated for their efficiency and speed of use in working environments and used increasingly also in domestic environments.

As a result of market demands, the range of capsules and pods has rapidly expanded with an increasing range of sizes and mixtures in order to satisfy an increasingly varied range of requirements and preferences expressed by the consumers.

This feature has considerably complicated the industrial production of capsules, pods and other single-use containers in particular for beverages, requiring the introduction of new machines and specific production lines for different products.

Moreover, the market increasingly sees a variety of packages of capsules or pods which contain products (even different ones) and the automated packaging of these products is made complex due to the combinations of different products which can be obtained and which are variable over time depending on the market needs.

This drawback is particularly felt in the case of packages which require a predetermined arrangement of the capsules or pods, for highlighting the appearance or to optimise the shape and/or the use of the space inside the package.

Currently, the most widespread packaging systems comprise a conveyor downstream of the production line which moves the capsules (or pods) and one or more transfer devices which pick them up from the conveyor and move them rigidly towards the packaging station where they are placed in a box or, alternatively, a box is assembled around them. Disadvantageously, these types of systems are not very elastic in moving the products from the conveyor to the packaging station and do not allow reciprocal movement of the capsules (or pods) to adapt the arrangement to various needs, even of a temporary nature, for presentation of the product or for combinations of different flavours and sizes.

Document WO2016088023 shows a machine for making beverage capsules comprising a hollow body provided with at least a first opening and at least a first covering wall for covering the first opening, wherein a first actuator device is adapted to move a filling unit in parallel with a forming direction according to a law of motion which includes an operational phase, where filler means move from a start filling position to an end filling position in the same direction and in synchronism with a first conveyor, and a return phase in the opposite direction; a first application unit is provided with a plurality of gripping devices adapted to grip the first walls and to apply the walls simultaneously to all the hollow bodies positioned in each of said rows and continuously to said rows moving forward in succession; a second actuator device is adapted to move the first sealing unit in parallel with the forming direction according to a law of motion which includes an operational phase, where sealing heads move from a start sealing position to an end sealing position in the same direction and in synchronism with the first conveyor, and a return phase in the opposite direction.

### Disclosure of the invention

In this context, the technical purpose which forms the basis of the invention is to provide a transfer unit for single-use containers containing a dose of food preparation (in particular for beverages), a relative transfer method and a packaging machine comprising the above-mentioned transfer unit which overcomes at least some of the above-mentioned drawbacks of the prior art.

In particular, the aim of the invention is to provide a transfer unit for single-use containers containing a dose of food preparation (in particular for beverages), a relative transfer method and a packaging machine comprising the above-mentioned transfer unit which is able to increase the flexibility of use of the prior art devices, allowing the reciprocal arrangement of the single-use containers to be adapted in preparation for boxing.

A further aim of the invention is to provide a transfer unit for single-use containers containing a dose of food preparation (in particular for beverages), a relative transfer method and a packaging machine comprising the above-mentioned transfer unit which is able to improve the spatial efficiency and/or the appearance of the arrangement of the single-use containers in the respective packages and allow the boxing of containers of different sizes or having different flavours in a same package according to a predetermined arrangement.

The technical purpose and aims specified are substantially achieved by a transfer unit for single-use containers containing a dose of food preparation (in particular for beverages), a relative transfer method and a packaging machine comprising the above-mentioned transfer unit comprising the technical features described in one or more of the appended claims.

In particular, according to a first aspect, the invention relates to a transfer unit for single-use for containers containing a dose of food preparation (in particular for beverages), wherein the transfer unit comprises a conveyor device, which defines a plurality of housings for respective single-use containers and is configured for feeding the single-use containers along a conveying direction, and a transfer unit which has a plurality of first gripping units and a plurality of second gripping units, wherein the transfer unit is rotatable about an axis of rotation to move the first and second gripping units between a pick-up station, wherein the gripping units receive respective single-use containers from the conveyor device, and a release station, wherein the gripping units release the respective single-use containers to a receiving element (which may be also defined by the same package), and wherein the first gripping units and the second gripping units are reciprocally movable about the axis of rotation in such a way as to vary an angular distance between the first and the second gripping units about the axis of rotation.

Preferably, the first and the second gripping units are circumferentially positioned on the transfer unit in such a way as to define respective successive rows of gripping units, and the rows are parallel relative to the axis of rotation.

Preferably, the transfer unit has a first support and a second support, rotatably movable independently about the axis of rotation and the first gripping units are fixed to the first support and the second gripping units are fixed to the second support.

Preferably, the first support comprises at least a first connecting portion and the second support comprises at least a second connecting portion and the first and second connecting portions have, respectively, first and second protrusions configured for supporting respective first and second gripping units, in such a way as to define a row of first gripping units aligned with each other and a row of second gripping units aligned with each other, and a plurality of first and second recesses alternated, respectively, between the first and second protrusions, wherein a reciprocal rotation of the first and second support determines a reciprocal moving towards or away of the first and second connecting portions between an alignment position, wherein each first protrusion is housed in a respective second recess and each second protrusion is housed in a respective first recess in such a way as to determine an alignment between the rows of first and second gripping units, and a misalignment position wherein the first and second connecting portions are angularly spaced about the axis of rotation.

Preferably, first support has a plurality of first connecting portions spaced at equal angular intervals and rigidly connected to each other and the second support has a plurality of second connecting portions spaced at equal angular intervals and rigidly connected to each another and the first and second connecting portions define a cylindrical-shaped drum-like outer structure equipped with openings between each first and second connecting portion located one after the other, wherein the openings give reciprocal freedom of movement about the axis of rotation to the first and second connecting portions.

Preferably, each of the first and second gripping units comprises an arm, connected to the transfer unit and extending away from the axis of rotation, and a gripper mounted on an end of the arm and configured to grip a respective single-use container, preferably in a perimeter portion of the single-use container.

Preferably, each arm extends along a respective peripheral transversal axis and preferably incident with the axis of rotation and is associated with a rotation mechanism acting on the arm for rotating the arm about the respective peripheral axis.

Preferably, the rotation mechanism is common to a plurality of first or second gripping units, preferably positioned aligned with each other. Preferably, the rotation mechanism comprises an oscillating bar mounted on the transfer unit and connected to each gripping unit of plurality of first or second gripping units and the bar is equipped with circular oscillating movement, preferably by means of pins inserted in circular or arc-shaped grooves.

Preferably, the conveyor device comprises a plurality of first and second delivery units positioned in the pick-up station and configured for adopting at least one pick-up position, wherein the delivery units grip respective single-use containers positioned in the housings of the conveyor device, and a release position wherein the first and second delivery units deliver the single-use containers respectively to the first and second gripping units.

Preferably, each housing of the conveyor device is defined at least partly by a hole made on a mobile surface of the conveyor device, and the delivery units can be moved through respective holes between a disengaged position, wherein the delivery units disengage the hole, and the gripping and release positions.

Preferably, the first and/or second delivery units are rotatable about respective axes of transversal adjustment, preferably perpendicular, with respect to the respective holes of the movable surface in the pick-up station, between an initial orientation, concordant with an orientation of the single-use container oriented in the respective housing, and a final orientation, concordant with an orientation of the respective first or second gripping unit.

Preferably, the conveyor device has a plurality of modules positioned in succession along a closed feed path and each module has a plurality of housings positioned along a first and a second row of housings substantially parallel to the axis of rotation, wherein the first row of housings has a number of housings equal to the number of first gripping units and the second row of housings has a number of housings equal to the sum of the number of first gripping units and second gripping units.

In accordance with a second aspect, the invention relates to a packaging machine for single-use containers containing a dose of food preparation (in particular for beverages), wherein the machine comprises a transfer unit and a receiving element, configured to receive a plurality of single-use containers from the gripping units of the transfer unit, wherein the receiving element comprises a receiving body having a plurality of pockets, each designed to house a respective single-use container and having, on a relative bottom wall, at least one suction hole which can be connected to a source of pneumatic negative pressure.

In accordance with a third aspect, the invention relates to a method for transferring single-use containers containing a dose of food preparation (in particular for beverages), wherein the method comprises the steps of preparing a first plurality of single-use containers in respective first housings of a conveyor device and a second plurality of single-use containers in respective second housings of the conveyor device; feeding the first and second plurality of single-use containers along a conveying direction by means of a conveyor device to a pick-up station; transferring the first and second plurality of single-use containers from the pick-up station to a release station by means of a rotational movement about an axis of rotation, in such a way as to position the first and second plurality of single-use containers in the release station according to a predetermined arrangement; wherein the transferring step comprises a sub-step of reciprocally moving the first and second plurality of single-use containers about the axis of rotation in such a way as to vary an angular distance between the first and second plurality of single-use containers relative to the axis of rotation.

Preferably, the single-use containers have respective axes of extension, preferably with axial symmetry, and the method comprises a step of modifying the arrangement of each single-use container of the first and/or second plurality of single-use containers by rotation of the single-use container about an axis of orientation which is transversal, preferably perpendicular, with respect to the axis of extension of the single-use container, wherein the axis of orientation passes through the single-use container.

Preferably, the step of modifying the arrangement of each single-use container is made at the pick-up station and/or during the transfer of the single-use containers from the pick-up station to the release station and/or at the release station.

Preferably, the step of modifying the arrangement of each single-use container is achieved by modifying the arrangement of the single-use containers of the first plurality of single-use containers in the opposite direction with respect to the arrangement of the single-use containers of the second plurality of single-use containers and preferably the arrangement of the single-use containers of the first plurality of single-use containers, in the release station, is uniform and symmetrically opposite the arrangement of the single-use containers of the second plurality of single-use containers.

Preferably, the step of transferring the first and second plurality of single-use containers is performed whilst the first and second plurality of single-use containers are positioned on rows parallel to each other and wherein the sub-step of reciprocally moving the first and second plurality of single-use containers is performed in such a way that, in the release station, the two rows are spaced from each other or fitted together by an alternating arrangement between the single-use containers of the first plurality and the single-use containers of the second plurality.

Further features and advantages of this invention are more apparent in the non-limiting description which follows of a preferred, non-limiting embodiment of a unit for transferring single-use containers containing a dose of food preparation (in particular for beverages), a relative transfer method and a packaging machine comprising the above-mentioned transfer unit.

### Brief description of the drawings

The description is set out below with reference to the accompanying drawings which are provided solely for purposes of illustration without restricting the scope of the invention and in which:
- Figure 1 shows a perspective view of a transfer unit for single-use containers according to the invention;
- Figure 1A shows a single-use container of the type containing a dose of preparation for food products;
- Figure 2 shows a perspective view of a detail of the transfer unit of Figure 1;
- Figure 2A shows a top view of the detail of Figure 2;
- Figure 3 shows a side view of the transfer unit of Figure 1 in an operating configuration in accordance with a step of a method for transferring single-use containers in accordance with the invention;
- Figure 3A shows a perspective view of a detail of Figure 3;
- Figure 4 shows a front view of the transfer unit of Figure 3 in a different operating configuration in accordance with a further step of the method according to the invention;
- Figure 5 shows a front view of the transfer unit of Figures 3 and 4 in a different operating configuration in accordance with a further step of the method according to the invention;
- Figure 6 shows a front view of the transfer unit of Figures 3 and 4 in a different operating configuration in accordance with a further step of the method according to the invention.

### Detailed description of preferred embodiments of the invention

With reference to the accompanying drawings, a transfer unit for single-use containers is denoted generically by the reference numeral 1 and reference is made to it below as 'transfer unit 1'.

The transfer unit 1 is configured for transferring single-use containers 'C', in particular containers of the type comprising a casing containing a dose of food preparation (preferably for extraction beverages, for example tea or coffee) and a filter contained inside the casing, such as in the case of some types of capsules, or defined by the casing itself, as in the case of some types of pods.

Preferably, the single-use containers 'C' to which this description refers are designed for allowing the extraction or infusion of the food preparation inside them by mean of suitable machines on the market and have a main axis of extension 'S', for example an axis of axial symmetry, in such a way as to allow the insertion in the relative machine according to any orientation relative to the angle.

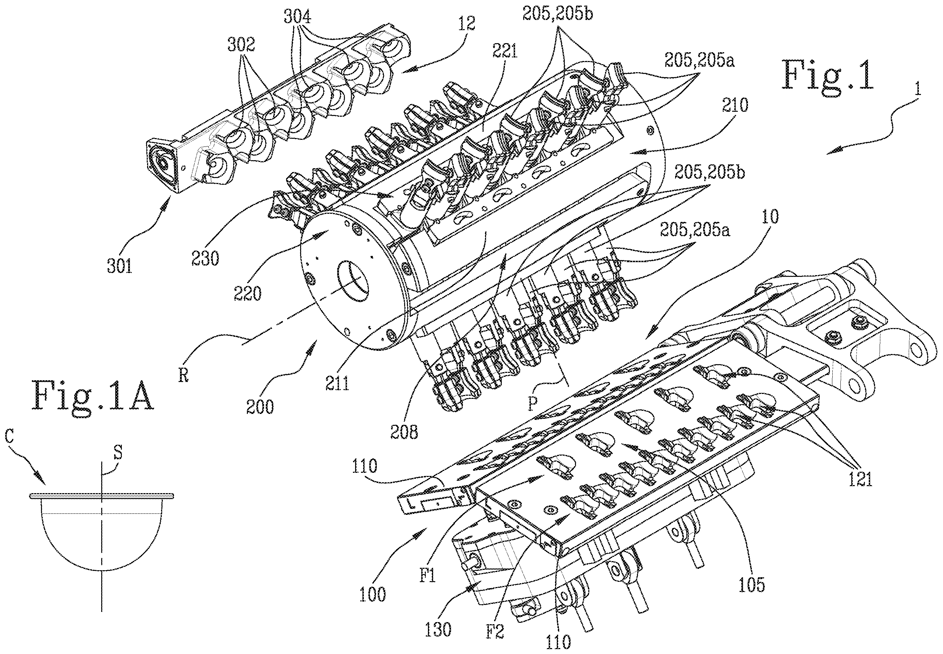

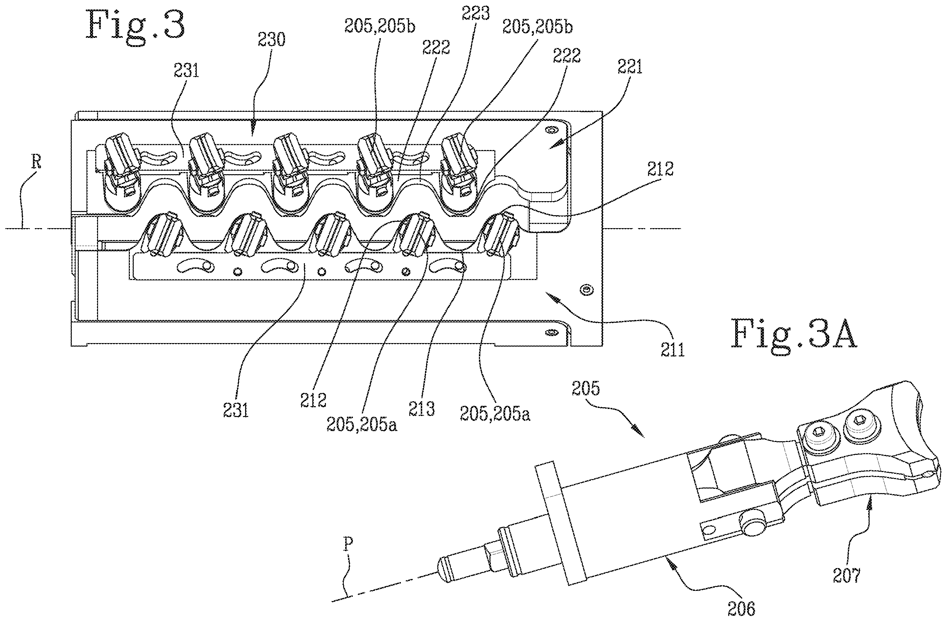

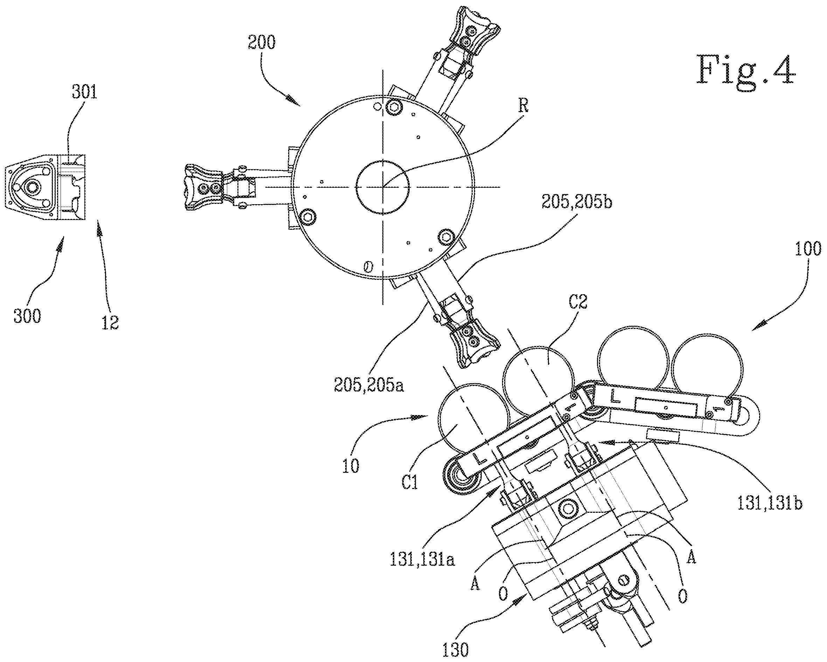

The transfer unit 1 comprises a conveyor device 100 configured to receive a plurality of single-use containers from a station upstream, for example a connection with one or more production lines of capsules and/or pods. Preferably, the conveyor device 100 has a plurality of modules 110 positioned in succession along a closed feed path and connected to each other in a rotatable fashion to define a movable surface 105 of the conveyor device 100, as illustrated in Figures 1 to 5, where, for simplicity, only two modules 110 are illustrated.

The conveyor device 100 has a plurality of housings 121 for respective single-use containers, in particular defined by shortages of material in the modules 110, preferably made in each module 110 along two rows substantially parallel to each other.

Preferably, the two rows have a different number of housings 121 arranged according to a different spacing, in such a way as to accommodate various types and sizes of single-use containers 'C'. In a preferred embodiment, a first row of housings 'F1' has a spacing between successive housings 121 designed to accommodate a plurality of single-use capsules, whilst a second row of housings 'F2' has a spacing between shorter housings 121 in such a way as to accommodate a number of single-use pods greater than the number of capsules housed in the first row of housings 'F1'. Advantageously, the housings 121 of the second row of housings 'F2', as illustrated in the drawings, may also accommodate capsules which are more voluminous than the above-mentioned pods according to an arrangement wherein each of them can occupy two housings 121 of the same row.

In the embodiment illustrated, the first row of housings 'F1' has five housings 121, whilst the second row of housings 'F2' has ten housings 121, five of which are aligned with respective housings 121 of the first row of housings 'F1'

Preferably, each housing 121 of the conveyor device 100 is at least partly by a hole 122 made on the movable surface 105 of the conveyor device 100.

Moreover, the conveyor device 100 has a plurality of delivery units 131 which can be moved through respective holes 122 to grip the single-use containers 'C' positioned in the respective housings 121 and imparting on them predetermined movements.

Preferably, each delivery unit 131 comprises a rod 132 and two tips 133 positioned in a gripper fashion and configured to close on a perimeter portion of a container 'C', in particular a laminar, or in any case thin, edge, in such a way as to establish a grip on it.

The delivery units 131 are positioned at a pick-up station 10 in an end portion of the conveyor device 100 and, in the preferred embodiment, have a matrix-type distribution on a base 130 located below the movable surface 105 and which can be moved towards it.

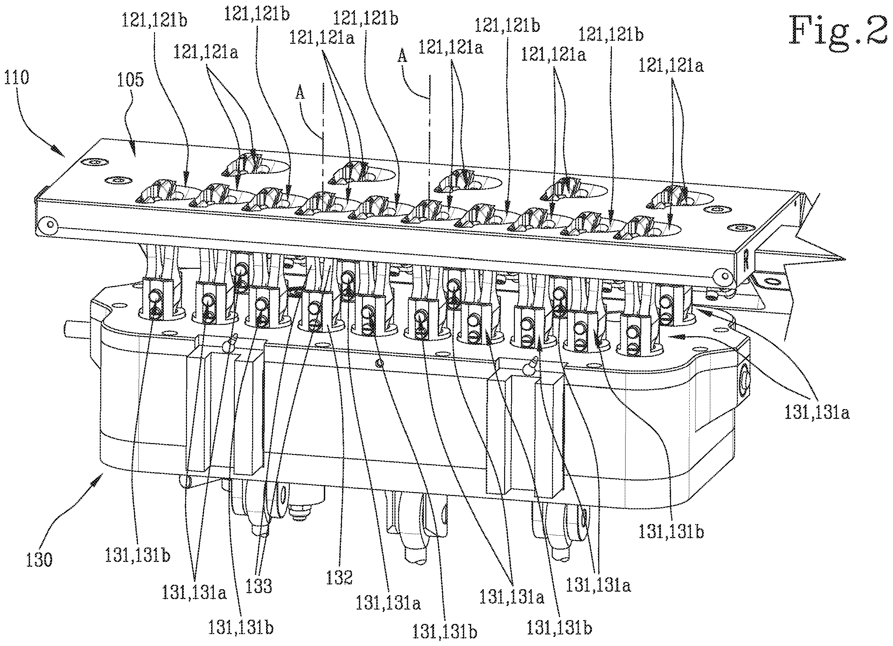

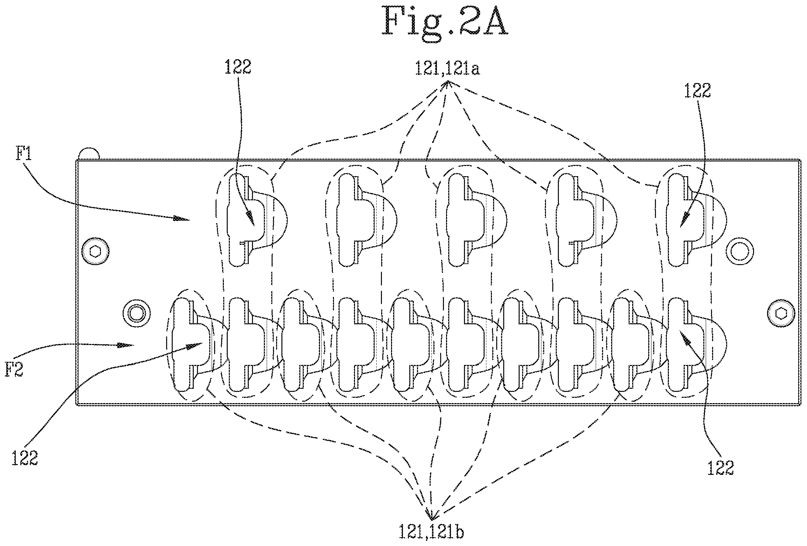

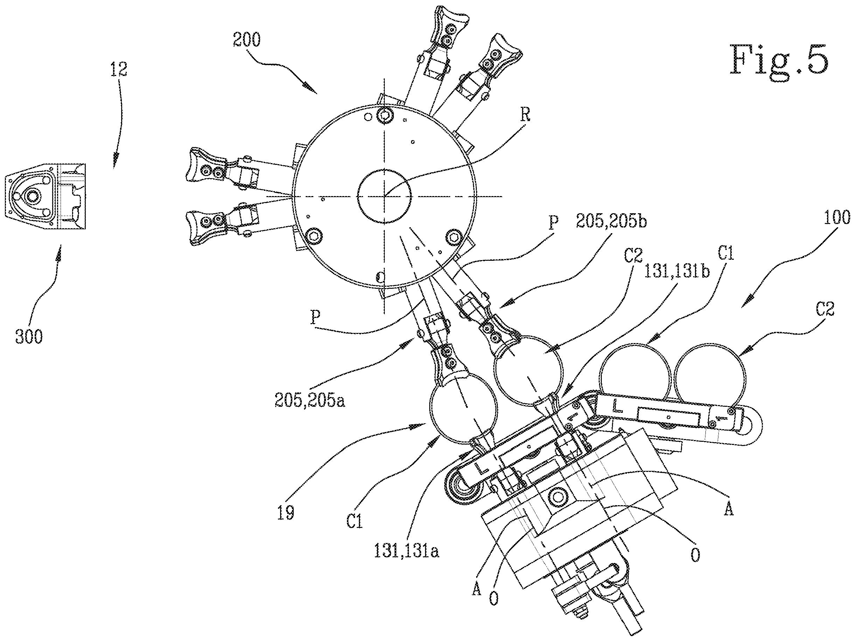

As shown in Figure 2, the delivery units 131 are distributed on the base 130 with the same distribution of the housings 121 and the base 130 is movable in coordination with the movable surface 105 between a disengaged position, wherein the delivery units 131 disengage the movable surface 105 and leave it free for feeding the housings 121 and a picking up position (Figure 5), wherein each delivery unit 131 engages a respective hole 122 to pick up a container 'C' housed in the respective housing 121.

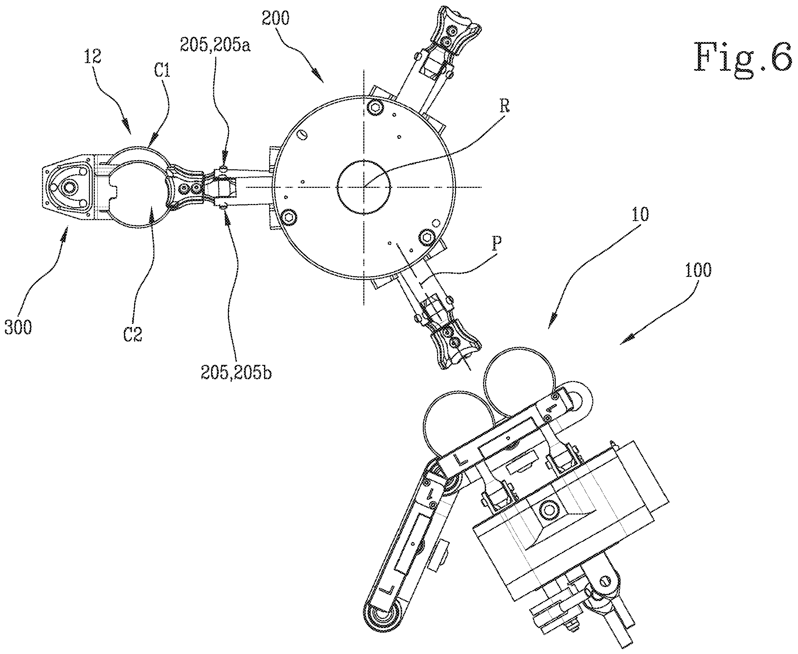

The base 130 can further be moved towards the movable surface 105 in such a way that the delivery units 131 pass through the respective holes 122, between the gripping position and a release position (Figure 6), to lift the containers 'C' with respect to the respective housings 121. In the release position the delivery units 131 are configured to release the containers 'C' in such a way as to allow the picking up and the movement to successive units.

The delivery units 131 are divided into first delivery units 131a associated with a first plurality of containers 'C1' and second delivery units 131b associated with a second plurality of containers 'C2'.

At least the first delivery units 131a or the second delivery units 131b, preferably both, are rotatable about respective adjustment axes 'A' transversal or perpendicular relative to the respective holes 122. More specifically, the first delivery units 131a are rotatable in a direction of rotation opposite to the second delivery units 131b.

In this way, the delivery units 131 make it possible to rotate mutually the first plurality and the second plurality of containers 'C1' and 'C2' after their picking up from the housings 121, modifying the orientation about respective axes of orientation 'O'.

The axes of orientation 'O' are transversal or preferably perpendicular to the axes of extension 'S' of the respective single-use containers 'C' and passing through the single-use containers 'C', between an initial orientation, concordant with an orientation of the containers 'C' in the respective housings 121, and a final orientation.

In this way, the first and second delivery units 131a and 131b make it possible to rotate the respective first and second plurality of containers 'C1' and 'C2' according to directions of rotation which are opposite the axes of orientation 'O'.

Preferably, the delivery units 131 are associated with the housings 121 in such a way as to allow a rotation of the single-use containers 'C' according to opposite angles of directions alternatively one after another.

More specifically, at the first row of housings 'F1' are associated respective first delivery units 131a positioned along a first line aligned with it and at the second row of housings 'F2' are associated respective first and second delivery units 131a and 131b alternated with each other and arranged along a second line parallel to the first and aligned with the second row of housings 'F2', as illustrated in Figure 2.

It should be noted how, according to the arrangement described above, the distribution matrix of the delivery units 131 on the base 130 comprises a succession of pairs of first delivery units 131a arranged side by side alternating with a succession of individual second delivery units 131b. The transfer unit 1 also comprises transfer means 200 which have a first support 210 and a second support 220 rotatably movable independently about a common axis of rotation 'R'.

Preferably, the first support 210 has a plurality of first connecting portions 211 at equal angular intervals about the axis of rotation "R" and rigidly connected to one another. Similarly, the second support 220 has as many second connecting portions 221 at equal angular intervals about the axis of rotation 'R' and rigidly connected to one another, associated with the first connecting portions 211 in such a way as to define together with the latter a cylindrical-shaped drum-like outer structure equipped with openings 208 between each first and second connecting portion 211 and 221. These openings 208 are configured in such a way as to give a reciprocal freedom of movement to the first and to the second connecting portions 211 and 221, and consequently to the first and second support 210 and 220, about the axis of rotation 'R'.

The embodiment illustrated has exactly three first connecting portions 211 and exactly three second connecting portions 221 at angular intervals of 120° to each other.

Preferably, each first connecting portion 211 has a plurality of first protrusions 212 and first recesses 213 alternated between successive first protrusions 212 and each second connecting portion 221 has a plurality of second protrusions 222 facing respective first recesses 213 and a plurality of second recesses 223 alternated between successive second protrusions 222 and facing respective first protrusions 212. Advantageously, the first and the second connecting portions 211 and 221 are associated in such a way that the first protrusions 212 are movable in the second recesses 223 and the second protrusions 222 are movable in the first recesses 213 following a reciprocal rotation between the first and the second support 210 and 220.

Moreover, the transfer means 200 comprise a plurality gripping units 205 positioned on the first and second protrusions 212 and 222 and associated with respective delivery units 131 and configured to receive from them the single-use containers 'C' picked up from the housings 121.

Preferably, each gripping unit 205 comprises an arm 206 which extends along a peripheral axis 'P' which is transversal or incident to the axis of rotation 'R' and a gripper 207 mounted on an end of the arm 206 and configured to grip a respective single-use container 'C' in a perimeter portion of the container, similarly to the ends of the delivery units 131. The gripping units 205 are divided into a plurality of first gripping units 205a fixed to respective first protrusions 212 at the arms 206 in such a way that each first connecting portion 211 supports a row parallel to the axis of rotation 'R' of first gripping units 205a aligned with each other and in a plurality of second gripping units 205b similarly fixed to respective second protrusions 222 in such a way that each second connecting portion 221 supports a row of second gripping units 205b.

According to an embodiment not illustrated, the relative position along the direction of extension of the axis of rotation "R" of the first gripping units 205a with respect to the second gripping units 205b is adjustable (both manually and automatically).

In other words, it is possible to adjust (automatically or manually) the relative position of the first gripping units 205a with respect to the second gripping units 205b along the axial direction of the axis of rotation 'R'. This advantageously allows the unit 1 be adapted to different sizes of single-use containers, that is to say, allows the unit 1 to be set up for the size of the container in use (thereby increasing the flexibility of the unit 1). Moreover, the unit 1 may comprise means for adjusting the relative position of the first gripping units 205a relative to the second gripping units 205b along the axial direction of the axis of rotation 'R' (not illustrated). Preferably, the adjusting means comprise a regulating element (not illustrated), to which are fixed the first gripping units 205a or the second gripping units 205b.

Preferably, the regulating element is movable along the axial direction of the axis of rotation 'R': it is positioned in a predetermined longitudinal position with respect to the axis of rotation 'R' for adjusting the relative position of the first gripping units 205a with respect to the second gripping units 205b along the axial direction of the axis of rotation 'R'.

The first and second gripping units 205a and 205b thus configured can be moved independently about the axis of rotation 'R' following rotations of the first and second supports 210 and 220 around the same axis of rotation 'R', between a pick-up station 10, wherein they receive a plurality of single-use containers 'C' from respective delivery units 131, and a release station 12, in which they transfer each single-use container 'C' to a receiving element 300.

It should be noted that said receiving element 300 may also consist of the final package; in this case, in the release station 12 the single-use containers 'C' are released by the transfer unit 1 directly in the final package.

According to an aspect, the final package may be made starting from a blank (preferably flat).

Alternatively, the receiving element 300 may be any unit (or a set of units, acting in conjunction with each other) designed to allow the single-use containers to be picked up for the subsequent inserting in the final package.

Preferably, the arrangement of the first and second gripping units 205a and 205b on the first and second connecting portions 211 and 221 is such that a reciprocal rotation of the first and second supports 210 and 220 determines a mutual moving towards or away between the first gripping units 205a and 205b between an alignment position and a misalignment position, varying an angular distance between the first about the axis of rotation 'R'.

In the alignment position, illustrated in Figures 1, 4 and 6, each first protrusion 212 is housed in a respective second recess 223 and each second protrusion 222 is housed in a respective first recess 213 in such a way as to determine an alignment between respective rows of first and second gripping units 205a and 205b.

In the misalignment position, illustrated in Figure 5, the first and second connecting portions 211 and 221 and the respective first and second gripping units 205a and 205b are angularly spaced from each other about the axis of rotation 'R'.

Preferably, each arm 206 of the gripping units 205 is hinged to the transfer means 200 in such a way as to be rotatable about the respective peripheral axis 'P' and is associated with a rotation mechanism 230, preferably shared with a plurality of first or second gripping units 205a or 205b aligned with each other, acting on the arm 206 to place it in rotation. In a preferred embodiment, the rotation mechanism 230 comprises an oscillating bar 231 mounted on the transfer means 200 and connected to each arm 206 a row of first or second gripping units 205a or 205b in such a way as to define a lever relative to the respective peripheral axis 'P'. Preferably, each bar 231 is connected to the respective first or second connecting portion 211 or 221 by means of pins inserted in circular or arc-shaped grooves, in such a way as to that they can be moved according to a circular oscillation movement and allow an adjustment of the rotation of the arm 206 about the peripheral axis 'P'.

Advantageously, the rotation mechanism 230 described above makes it possible to adjust the orientation of the gripping units 205 in accordance with the orientation of the delivery units 131 in their release position.

The invention further relates to a packaging machine for single-use containers "C" of the type described above and comprising the transfer unit 1 associated with a receiving element 300, configured to receive a plurality of single-use containers "C" from the gripping units 205.

The receiving element 300 comprises a receiving body 301 having a plurality of pockets 302 designed to house respective single-use containers 'C'. The arrangement of the pockets 302 in the receiving body 301 is adapted to the arrangement of the single-use containers 'C' desired for the packaging and the receiving body 301 can be replaced with receiving bodies 301 with a different geometry for changing the above-mentioned arrangement.

The pockets 302 have respective suction holes 304 at respective bottom walls. Advantageously, suction holes 304 are connectable to a source of pneumatic negative pressure which creates a negative pressure in the pockets 302 in such a way to temporarily constrain a plurality of single-use containers coming from the transfer means 200 to the receiving element 300.

Advantageously, the transfer unit 1 described above is able to modify the distance between the rows of capsules in accordance with the arrangement of the pockets 302 by means of independent rotations of the first and second support 210 and 220.

Another object of the invention a method for transferring single-use containers "C" of the type described above.

The method comprises a preliminary step of preparing a first plurality of containers 'C1', coming, for example, from respective production lines located upstream of the transfer unit 1, in respective first housings 121a of the conveyor device 100 and a second plurality of containers 'C2' in respective second housings 121b of the conveyor device 100. Preferably, the first and second housings 121a and 121b are configured like the housings 121 described above and are preferably distributed between the first and second row 'F1' and 'F2' parallel to each other according to the arrangement of Figure 6.

Subsequently, the method comprises a step of feeding the first and second plurality of containers 'C1' and 'C2' along a conveying direction by means of the conveyor device 100 described above up to the pick-up station 10, where the first and second plurality of containers 'C1' and C2 " are gripped respectively by the first and by the second delivery units 131a and 131b which extract them from the respective housings 121. Subsequently, the method comprises a step of modifying the orientation of each single-use container "C" by means of a rotation of the container about a respective axis of orientation "O".

Each orientation axis 'O' is transversal, preferably perpendicular, relative to the respective axis of extension 'S' and passing through the respective container 'C' lying in such a way as to allow a change of the container 'C'.

Preferably, the step for modifying the arrangement of the single-use containers 'C' is performed by the delivery units 131 described above at the pick-up station 10.

Subsequently, the method comprises a step of transferring the first and second plurality of single-use containers 'C1' and 'C2' from the pick-up station 10 to a release station 12 by a rotation about an axis of rotation "R", in such a way as to position the first and second plurality of containers in the release station 12 according to a predetermined arrangement, preferably by picking up the containers "C" by the gripping units 205 described above and a rotation of the gripping units 205 about the axis of rotation "R".

Preferably, the transfer step comprises a sub-step of reciprocally moving the first and second plurality of containers 'C1' and 'C2' about the axis of rotation 'R' in such a way as to vary an angular distance between the first and second plurality of containers 'C1' and 'C2' with respect to the axis of rotation 'R', preferably by means of independent rotations about the axis of rotation 'R' of the first and second gripping units 205a and 205b as described above.

Preferably, the steps described above do not modify the arrangement of the single-use containers 'C' in rows parallel to each other deriving from the arrangement in the first and second row of housings 'F1' and 'F2' described above and during the transfer step the first and second plurality of containers 'C1' and 'C2' are positioned on rows parallel to each other. Moreover, the sub-step of reciprocally moving the first and second plurality of containers 'C1' and 'C2' is performed in such a way that, in the release station 12, the two rows are spaced from each other or fitted together by an alternating arrangement between the single-use containers 'C' of the first plurality of containers 'C1' and the single-use containers 'C' of the second plurality of containers 'C2'.

In an alternative embodiment not illustrated, the step of modifying the arrangement is performed during the transfer step from the pick-up station 10 to the release station 12 and/or at the release station 12, preferably by means of a rotation of the gripping units 205 about the peripheral axis "P". The invention achieves the set aim by obviating the drawbacks of the prior art.

Advantageously, the different rotation of the first and second gripping units allows the reciprocal movement towards and away of the two rows of single-use containers positioned in the respective housings. Moreover, the rotation of the single-use containers about the axis of orientation achieved by the rotation of the delivery units allows, in synergy with the adjustability of the distance between the rows, automatically placing containers of different types in spatially efficient and/or aesthetically satisfactory configurations in preparation for the packaging.

Moreover, the invention makes it possible to adapt the machine to different configurations and products which, instead of requiring the replacement of the machine, simply require the replacement of the receiving body and the reconfiguration of the movements of the components of the boxing units.

## Claims

1. A transfer unit (1) for single-use containers containing a dose of food preparation, said transfer unit (1) comprising:
- a conveyor device (100) defining a plurality of housings (121) for respective single-use containers (C) and configured for feeding said single-use containers (C) along a conveying direction;
- transfer means (200) having a plurality of first gripping units (205a) and a plurality of second gripping units (205b), said transfer means (200) being rotatable about an axis of rotation (R) for moving the first and second gripping units (205a, 205b) between a pick-up station (10), wherein said gripping units (205a, 205b) receive respective single-use containers (C) from the conveyor device (100), and a release station (12), wherein said gripping units (205a, 205b) release the respective single-use containers (C) to a receiving element (300),
wherein each gripping unit of said first gripping units (205a) is positioned alternated with a respective gripping unit of said second gripping units (205b), said first and second gripping units (205a; 205b) being positioned along a common axis parallel to the axis of rotation (R), the transfer unit (1) being **characterized in that** said first gripping units (205a) and said second gripping units (205b) are movable relative to each other about the axis of rotation (R) in such a way as to vary an angular distance between the first and the second gripping units (205a, 205b) about the axis of rotation (R).

2. The transfer unit (1) according to claim 1, wherein said first and second gripping units (205a, 205b) are circumferentially positioned on said transfer means (200) in such a way as to define respective successive rows of gripping units (205a, 205b), said rows being parallel relative to said axis of rotation (R).

3. The transfer unit (1) according to claim 1 or 2, wherein said transfer means (200) has a first support (210) and a second support (220), rotatably movable independently about said axis of rotation (R), said first gripping units (205a) being fixed to the first support (210) and said second gripping units (205b) being fixed to the second support (220).

4. The transfer unit (1) according to claim 3, wherein said first support (210) comprises at least a first connecting portion (211) and said second support (220) comprises at least a second connecting portion (221),
the first and second connecting portions (211, 221) having respectively first and second protrusions (212, 222), configured for supporting respective first and second gripping units (205a, 205b), in such a way as to define a row of first gripping units (205a) aligned with each other and a row of second gripping units (205b) aligned with each other, and a plurality of first and second recesses (213, 223) alternated, respectively, between said first and second protrusions (212, 222),
a reciprocal rotation of said first and second supports (210, 220) determining a mutual moving towards or away of said first and second connecting portions (211, 221) between an alignment position, wherein each first protrusion (212) is housed in a respective second recess (223) and each second protrusion (222) is housed in a respective first recess (213) in such a way as to determine an alignment between said rows of first and second gripping units (205a, 205b), and a misalignment position, wherein the first and second connecting portions (211, 221) are angularly spaced about the axis of rotation (R).

5. The transfer unit (1) according to claim 4, wherein said first support (210) has a plurality of first connecting portions (211) spaced at equal angular intervals and rigidly connected to each other and wherein said second support (220) has a plurality of second connecting portions (221) spaced at equal angular intervals and rigidly connected to each another, said first and second connecting portions (211, 221) defining a cylindrical-shaped drum-like outer structure equipped with openings (208) between each first and second connecting portion (211, 221) located one after the other, said openings (208) giving reciprocal freedom of movement about said axis of rotation (R) to said first and second connecting portions (211, 221).

6. The transfer unit (1) according to any one of the preceding claims, wherein each of said first and second gripping units (205a, 205b) comprises an arm (206), connected to said transfer means (200) and extending away from said axis of rotation (R), and a gripper (207) mounted on an end of the arm (206) and configured to grip a respective single-use container (C), preferably in a perimeter portion of the single-use container (C).

7. The transfer unit (1) according to claim 6, wherein each arm (206) extends along a respective peripheral transversal axis (P) and preferably incident to said axis of rotation (R) and is associated with a rotation mechanism (230) acting on the arm (206) for rotating said arm (206) about the respective peripheral axis (P).

8. The transfer unit (1) according to any one of the preceding claims, wherein said conveyor device (100) comprises a plurality of first and second delivery units (131a, 131b) positioned in the pick-up station (10) and configured for adopting at least one pick-up position, wherein said delivery units (131a, 131b) grip respective single-use containers (C) positioned in the housings (121) of the conveyor device (100), and a release position wherein said first and second delivery units (131a, 131b) deliver the single-use containers (C) respectively to said first and second gripping units (205a, 205b).

9. The transfer unit (1) according to claim 8, wherein each housing (121) of the conveyor device (100) is defined at least partly by a hole (122) made on a mobile surface (105) of the conveyor device (100), and wherein said delivery units (131a, 131b) can be moved through respective holes (122) between a disengaged position, wherein the delivery units (131a, 131b) disengage said hole (122), and said gripping and release positions.

10. The transfer unit (1) according to any one of the preceding claims, wherein said conveyor device (100) has a plurality of modules (110) positioned in succession along a closed feed path, each module (110) having a plurality of housings (121) positioned along a first and a second row of housings (F1, F2) substantially parallel to said axis of rotation (R), said first row of housings (F1) having a number of housings (121) equal to the number of first gripping units (205a) and the second row of housings (F2) having a number of housings (121) equal to the sum of the number of first gripping units (205a) and second gripping units (205b).

11. A packaging machine for single-use containers containing a dose of food preparation, said machine comprising:
- a transfer unit (1) according to any one of claims 1 to 10;
- a receiving element (300), configured to receive a plurality of single-use containers (C) from the gripping units (205a, 205b) of the transfer unit (1); wherein said receiving element (300) comprises a receiving body (301) having a plurality of pockets (302), each designed to house a respective single-use container (C) and having, on its bottom wall, at least one suction hole (304) connectable to a source of negative pneumatic pressure.

12. A method for transferring single-use containers containing a dose of food preparation, said method comprising the steps of:
- preparing a first plurality of single-use containers (C1) in respective first housings (121a) of a conveyor device (100) and a second plurality of single-use containers (C2) in respective second housings (121b) of said conveyor device (100);
- feeding said first and second plurality of single-use containers (C1, C2) along a conveying direction by means of said conveyor device (100) to a pick-up station (10);
- transferring the first and second plurality of single-use of containers (C1, C2) from the pick-up station (10) to a release station (12) by a rotation movement about an axis of rotation (R), in such a way as to position the first and second plurality of single-use containers (C1, C2) in the release station (12) according to a predetermined arrangement;
wherein said transfer step is performed by means of a transfer means (200) rotatable about said axis of rotation (R) and having first gripping units (205a) and second gripping units (205b), each gripping unit of said first gripping units (205a) being positioned alternated with a respective second gripping unit of said second gripping units (205b), said first and second gripping units (205a; 205b) being positioned along a common axis parallel to the axis of rotation (R); and the method being **characterized in that** said transfer step comprises a sub-step of mutually moving said first and second plurality of single-use containers (C1, C2) about said axis of rotation (R) in such a way as to vary an angular distance between the first and second plurality of single-use containers (C1, C2) relative to the axis of rotation (R).

13. The method according to claim 12, wherein each single-use container (C1, C2) has an axis of symmetry (S), said method comprising a step of modifying the orientation of each single-use container of said first and/or second plurality (C1, C2) by rotation of the single-use container (C1, C2) about an axis of orientation (O) which is transversal, preferably perpendicular, with respect to the axis of symmetry (S) of the single-use container (C1, C2), said axis of orientation (O) passing through said single-use container (C1, C2).

14. The method according to claim 13, wherein said step of modifying the arrangement of each single-use container (C1, C2) is made at the pick-up station (10) and/or during the transfer of the single-use containers (C1, C2) from the pick-up station (10) to the release station (12) and/or at the release station (12).

15. The method according to claim 13 or 14, wherein said step of modifying the orientation of each single-use container (C1, C2) is achieved by rotating the first plurality of single-use containers (C1) in the opposite direction with respect to the second plurality of single-use containers (C2).

## Patentansprüche

1. Überführungseinheit (1) für Einwegbehälter, enthaltend eine Dosis einer Nahrungsmittelzubereitung, wobei die Überführungseinheit (1) Folgendes umfasst:
- eine Fördervorrichtung (100), definierend eine Vielzahl von Aufnahmen (121) für jeweilige Einwegbehälter (C), und ausgelegt, um diese Einwegbehälter (C) entlang einer Förderrichtung zuzuführen;
- Überführungsmittel (200), aufweisend eine Vielzahl von ersten Greifeinheiten (205a) und eine Vielzahl von zweiten Greifeinheiten (205b), wobei die Überführungsmittel (200) um eine Rotationsachse (R) drehbar sind, um die ersten und zweiten Greifeinheiten (205a, 205b) zwischen einer Aufnahmestation (10), in der die Greifeinheiten (205a, 205b) jeweilige Einwegbehälter (C) von der Fördervorrichtung (100) aufnehmen, und einer Freigabestation (12), in der die Greifeinheiten (205a, 205b) die jeweiligen Einwegbehälter (C) an ein Empfangselement (300) abgeben, zu bewegen,
wobei eine jede Greifeinheit der ersten Greifeinheiten (205a) abwechselnd mit einer jeweiligen Greifeinheit der zweiten Greifeinheiten (205b) positioniert ist, wobei die ersten und die zweiten Greifeinheiten (205a; 205b) entlang einer gemeinsamen Achse positioniert sind, die parallel zur Rotationsachse (R) angeordnet ist, wobei die Überführungseinheit (1) **dadurch gekennzeichnet ist, dass** die ersten Greifeinheiten (205a) und die zweiten Greifeinheiten (205b) relativ zueinander um die Rotationsachse (R) bewegbar sind, sodass ein Winkelabstand zwischen den ersten und zweiten Greifeinheiten (205a, 205b) um die Rotationsachse variiert wird.

2. Überführungseinheit (1) nach Anspruch 1, wobei die ersten und die zweiten Greifeinheiten (205a, 205b) umfangseitig auf den Überführungsmitteln (200) positioniert sind, sodass sie jeweilige aufeinanderfolgende Reihen von Greifeinheiten (205a, 205b) definieren, wobei diese Reihen relativ zur Rotationsachse (R) parallel sind.

3. Überführungseinheit (1) nach Anspruch 1 oder 2, wobei die Überführungsmittel (200) eine erste Halterung (210) und eine zweite Halterung (220) aufweisen, die unabhängig voneinander um die Rotationsachse (R) drehbar sind, wobei die ersten Greifeinheiten (205a) an der ersten Halterung (210) fixiert sind und die zweiten Greifeinheiten (205b) an der zweiten Halterung (220) fixiert sind.

4. Überführungseinheit (1) nach Anspruch 3, wobei die erste Halterung (210) mindestens einen ersten Verbindungsabschnitt (211) umfasst und die zweite Halterung (220) mindestens einen zweiten Verbindungsabschnitt (221) umfasst,
wobei der erste und der zweite Verbindungsabschnitt (211, 221) jeweilige erste und zweite Vorsprünge (212, 222) aufweisen, die ausgelegt sind, um jeweilige erste und zweite Greifeinheiten (205a, 205b) zu tragen, sodass eine Reihe erster Greifeinheiten (205a), die zueinander ausgerichtet sind, und eine Reihe zweiter Greifeinheiten (205b), die zueinander ausgerichtet sind, definiert werden, und eine Vielzahl erster und zweiter Vertiefungen (213, 223), die jeweils zwischen den ersten und zweiten Vorsprüngen (212, 222) abgewechselt sind, wobei eine gegenseitige Drehung der ersten und der zweiten Halterung (210, 220) eine gegenseitige Bewegung hinführend zu oder wegführend von den ersten und zweiten Verbindungsabschnitten (211, 221) zwischen einer Ausrichtungsposition, in der ein jeder erster Vorsprung (212) in einer jeweiligen zweiten Vertiefung (223) untergebracht ist und ein jeder zweiter Vorsprung (222) in einer jeweiligen ersten Vertiefung (213) untergebracht ist, sodass eine Ausrichtung zwischen den Reihen erster und zweiter Greifeinheiten (205a, 205b) bewirkt wird, und einer Fehlausrichtungsposition bewirkt, in der die ersten und zweiten Verbindungsabschnitte (211, 221) winkelig um die Rotationsachse (R) beabstandet sind.

5. Überführungseinheit (1) nach Anspruch 4, wobei die erste Halterung (210) eine Vielzahl von ersten Verbindungsabschnitten (211) aufweist, die in gleichen Winkelintervallen beabstandet und steif miteinander verbunden sind, und wobei die zweite Halterung (220) eine Vielzahl von zweiten Verbindungsabschnitten (221) aufweist, die in gleichen Winkelintervallen beabstandet und steif miteinander verbunden sind, wobei die ersten und zweiten Verbindungsabschnitte (211, 221) eine zylinderförmige trommelähnliche Außenstruktur definieren, versehen mit Öffnungen (208) zwischen einem jeden ersten und zweiten Verbindungsabschnitt (211, 221), die jeweils nacheinander angeordnet sind, wobei die Öffnungen (208) den ersten und zweiten Verbindungsabschnitten (211, 221) eine gegenseitige Bewegungsfreiheit um die Rotationsachse (R) gewähren.

6. Überführungseinheit (1) nach einem der vorhergehenden Ansprüche, wobei eine jede der ersten und zweiten Greifeinheiten (205a, 205b) einen Arm (206), der mit den Überführungsmitteln (200) verbunden ist und sich wegführend von der Rotationsachse (R) erstreckt, und einen Greifer (207) umfasst, der an einem Ende des Arms (206) montiert und ausgelegt ist, um einen jeweiligen Einwegbehälter (C) vorzugsweise in einem Umfangsabschnitt des Einwegbehälters (C) zu greifen.

7. Überführungseinheit (1) nach Anspruch 6, wobei sich ein jeder Arm (206) entlang einer jeweiligen umfangseitigen Querachse (P) und vorzugsweise einfallend zur Rotationsachse (R) erstreckt und mit einem Rotationsmechanismus (230) assoziiert ist, der auf den Arm (206) wirkt, um den Arm (206) um die jeweilige umfangseitige Achse (P) zu drehen.

8. Überführungseinheit (1) nach einem der vorhergehenden Ansprüche, wobei die Fördervorrichtung (100) eine Vielzahl von ersten und zweiten Übergabeeinheiten (131a, 131b) umfasst, die in der Aufnahmestation (10) positioniert und ausgelegt sind, um mindestens eine Aufnahmeposition, in der die Übergabeeinheiten (131a, 131b) jeweilige Einwegbehälter (C) greifen, die in den Aufnahmen (121) der Fördervorrichtung (100) positioniert sind, und eine Freigabeposition einzunehmen, in der die ersten und zweiten Übergabeeinheiten (131a, 131b) die Einwegbehälter (C) jeweils an die ersten und zweiten Greifeinheiten (205a, 205b) übergeben.

9. Überführungseinheit (1) nach Anspruch 8, wobei eine jede Aufnahme (121) der Fördervorrichtung (100) mindestens teilweise durch ein Loch (122) definiert ist, das auf einer mobilen Oberfläche (105) der Fördervorrichtung (100) ausgebildet ist, und wobei die Übergabeeinheiten (131a, 131b) durch jeweilige Löcher (122) zwischen einer gelösten Position, in der sich die Übergabeeinheiten (131a, 131b) vom Loch (122) lösen, und den Greif- und Freigabepositionen bewegt werden können.

10. Überführungseinheit (1) nach einem der vorhergehenden Ansprüche, wobei die Fördervorrichtung (100) eine Vielzahl von Modulen (110) aufweist, die nacheinander entlang eines geschlossenen Förderwegs positioniert sind, wobei ein jedes Modul (110) eine Vielzahl von Aufnahmen (121) aufweist, die entlang einer ersten und einer zweiten Reihe von Aufnahmen (F1, F2) positioniert sind, im Wesentlichen parallel zur Rotationsachse (R), wobei die erste Reihe von Aufnahmen (F1) eine Anzahl von Aufnahmen (121) gleich der Anzahl der ersten Greifeinheiten (205a) aufweist und die zweite Reihe von Aufnahmen (F2) eine Anzahl von Aufnahmen (121) gleich der Summe der Anzahl von ersten Greifeinheiten (205a) und zweiten Greifeinheiten (205b) aufweist.

11. Verpackungsmaschine für Einwegbehälter, enthaltend eine Dosis einer Nahrungsmittelzubereitung, wobei die Maschine Folgendes umfasst:
- eine Überführungseinheit (1) nach einem der Ansprüche 1 bis 10;
- ein Empfangselement (300), das ausgelegt ist, um eine Vielzahl von Einwegbehältern (C) von den Greifeinheiten (205a, 205b) der Überführungseinheit (1) zu empfangen, wobei das Empfangselement (300) einen Empfangskörper (301) umfasst, aufweisend eine Vielzahl von Taschen (302), von denen eine jede ausgestaltet ist, um einen jeweiligen Einwegbehälter (C) unterzubringen, und aufweisend an der Bodenwand mindestens ein Saugloch (304), das mit einer Quelle eines negativen pneumatischen Drucks verbindbar ist.

12. Verfahren zum Überführen von Einwegbehältern, enthaltend eine Dosis einer Nahrungsmittelzubereitung, wobei das Verfahren die folgenden Schritte umfasst:
- Vorbereiten einer ersten Vielzahl von Einwegbehältern (C1) in jeweiligen ersten Aufnahmen (121) einer Fördervorrichtung (100) und einer zweiten Vielzahl von Einwegbehältern (C2) in jeweiligen zweiten Aufnahmen (121b) der Fördervorrichtung (100);
- Zuführen der ersten und zweiten Vielzahl von Einwegbehältern (C1, C2) entlang einer Förderrichtung mittels der Fördervorrichtung (100) an eine Aufnahmestation (10);
- Überführen der ersten und zweiten Vielzahl von Einwegbehältern (C1, C2) von der Aufnahmestation (10) an eine Freigabestation (12) durch eine Rotationsbewegung um eine Rotationsachse (R), sodass die erste und die zweite Vielzahl von Einwegbehältern (C1, C2) gemäß einer vorgegebenen Anordnung in der Freigabestation (12) positioniert werden,
wobei der Überführungsschritt durch Überführungsmittel (200) durchgeführt wird, die um die Rotationsachse (R) drehbar sind und erste Greifeinheiten (205a) und zweite Greifeinheiten (205b) aufweisen, wobei eine jede Greifeinheit der ersten Greifeinheiten (205a) abwechselnd mit einer jeweiligen zweiten Greifeinheit der zweiten Greifeinheiten (205b) positioniert ist, wobei die ersten und die zweiten Greifeinheiten (205a; 205b) entlang einer gemeinsamen Achse positioniert sind, die parallel zur Rotationsachse (R) angeordnet ist, wobei das Verfahren **dadurch gekennzeichnet ist, dass** der Überführungsschritt einen Unterschritt zum gegenseitigen Bewegen der ersten und zweiten Vielzahl von Einwegbehältern (C1, C2) um die Rotationsachse (R) umfasst, sodass ein Winkelabstand zwischen der ersten und zweiten Vielzahl von Einwegbehältern (C1, C2) relativ zur Rotationsachse (R) variiert wird.

13. Verfahren nach Anspruch 12, wobei ein jeder Einwegbehälter (C1, C2) eine Symmetrieachse (S) aufweist, wobei das Verfahren einen Schritt zum Ändern der Ausrichtung eines jeden Einwegbehälters der ersten und/oder zweiten Vielzahl (C1, C2) durch die Drehung des Einwegbehälters (C1, C2) um eine Ausrichtungsachse (O) umfasst, die quer, vorzugsweise senkrecht zur Symmetrieachse (S) des Einwegbehälters (C1, C2) angeordnet ist, wobei die Ausrichtungsachse (O) durch den Einwegbehälter (C1, C2) führt.

14. Verfahren nach Anspruch 13, wobei der Schritt zum Ändern der Anordnung eines jeden Einwegbehälters (C1, C2) an der Aufnahmestation (10) und/oder während der Überführung der Einwegbehälter (C1, C2) von der Aufnahmestation (10) an die Freigabestation (12) und/oder an der Freigabestation (12) erfolgt.

15. Verfahren nach Anspruch 13 oder 14, wobei der Schritt zum Ändern der Ausrichtung eines jeden Einwegbehälters (C1, C2) durchgeführt wird, indem die erste Vielzahl von Einwegbehältern (C1) in die entgegengesetzte Richtung im Vergleich zur zweiten Vielzahl von Einwegbehältern (C2) gedreht wird.

## Revendications

1. Unité de transfert (1) de contenants à usage unique contenant une dose de préparation alimentaire, ladite unité de transfert (1) comprenant :
- un dispositif de transport (100) définissant une pluralité de logements (121) pour des contenants à usage unique respectifs (C) et configuré pour alimenter lesdits contenants à usage unique (C) le long d'une direction de transport ;
- des moyens de transfert (200) ayant une pluralité de premières unités de préhension (205a) et une pluralité de secondes unités de préhension (205b), lesdits moyens de transfert (200) pouvant tourner autour d'un axe de rotation (R) pour déplacer les premières et secondes unités de préhension (205a, 205b) entre un poste de prélèvement (10), dans lequel lesdites unités de préhension (205a, 205b) reçoivent des contenants à usage unique respectifs (C) du dispositif de transport (100), et un poste de libération (12), dans lequel lesdites unités de préhension (205a, 205b) libèrent les contenants à usage unique respectifs (C) vers un élément de réception (300),
dans laquelle chaque unité de préhension desdites premières unités de préhension (205a) est positionnée en alternance avec une unité de préhension respective desdites secondes unités de préhension (205b), lesdites premières et secondes unités de préhension (205a; 205b) étant positionnées le long d'un axe commun parallèle à l'axe de rotation (R), l'unité de transfert (1) étant **caractérisée en ce que** lesdites premières unités de préhension (205a) et lesdites secondes unités de préhension (205b) sont mobiles l'une par rapport à l'autre autour de l'axe de rotation (R) de manière à varier une distance angulaire entre la première et la seconde unité de préhension (205a, 205b) autour de l'axe de rotation (R).

2. Unité de transfert (1) selon la revendication 1, dans laquelle lesdites première et seconde unités de préhension (205a, 205b) sont positionnées circonférentiellement sur lesdits moyens de transfert (200) de manière à définir des rangées successives respectives d'unités de préhension (205a, 205b), lesdites rangées étant parallèles audit axe de rotation (R) .

3. Unité de transfert (1) selon la revendication 1 ou 2, dans laquelle lesdits moyens de transfert (200) ont un premier support (210) et un second support (220), mobiles en rotation indépendamment autour dudit axe de rotation (R), lesdites premières unités de préhension (205a) étant fixées au premier support (210) et lesdites secondes unités de préhension (205b) étant fixées au second support (220).

4. Unité de transfert (1) selon la revendication 3, dans laquelle ledit premier support (210) comprend au moins une première partie de connexion (211) et ledit second support (220) comprend au moins une seconde partie de connexion (221),
les première et seconde parties de connexion (211, 221) ayant respectivement des première et seconde saillies (212, 222), configurées pour supporter des première et seconde unités de préhension respectives (205a, 205b), de manière à définir une rangée de premières unités de préhension (205a) alignées les unes avec les autres et une rangée de secondes unités de préhension (205b) alignées les unes avec les autres, et une pluralité de premiers et seconds évidements (213, 223) alternés, respectivement, entre lesdites première et seconde saillies (212, 222),
une rotation réciproque desdits premier et second supports (210, 220) déterminant un rapprochement ou un éloignement mutuel desdites première et seconde parties de connexion (211, 221) entre une position d'alignement, dans laquelle chaque première saillie (212) est logée dans un second évidement respectif (223) et chaque seconde saillie (222) est logée dans un premier évidement respectif (213) de manière à déterminer un alignement entre lesdites rangées de première et seconde unités de préhension (205a, 205b), et une position de désalignement, dans laquelle les première et seconde parties de connexion (211, 221) sont espacées angulairement autour de l'axe de rotation (R).

5. Unité de transfert (1) selon la revendication 4, dans laquelle ledit premier support (210) a une pluralité de premières parties de connexion (211) espacées à des intervalles angulaires égaux et connectées rigidement les unes aux autres et dans laquelle ledit second support (220) a une pluralité de secondes parties de connexion (221) espacées à des intervalles angulaires égaux et connectées rigidement les unes aux autres, lesdites première et seconde parties de connexion (211, 221) définissant une structure extérieure en forme de tambour cylindrique équipée d'ouvertures (208) entre chaque première et seconde partie de connexion (211, 221) située l'une après l'autre, lesdites ouvertures (208) donnant une liberté de mouvement réciproque autour dudit axe de rotation (R) auxdites première et seconde parties de connexion (211, 221).

6. Unité de transfert (1) selon l'une quelconque des revendications précédentes, dans laquelle chacune desdites première et deuxième unités de préhension (205a, 205b) comprend un bras (206), relié auxdits moyens de transfert (200) et s'étendant à l'écart dudit axe de rotation (R), et une pince (207) montée sur une extrémité du bras (206) et configurée pour saisir un contenant à usage unique (C) respectif, de préférence dans une partie périphérique du contenant à usage unique (C).

7. Unité de transfert (1) selon la revendication 6, dans laquelle chaque bras (206) s'étend le long d'un axe transversal périphérique respectif (P) et de préférence accessoire audit axe de rotation (R) et est associé à un mécanisme de rotation (230) agissant sur le bras (206) pour faire tourner ledit bras (206) autour de l'axe périphérique respectif (P).

8. Unité de transfert (1) selon l'une quelconque des revendications précédentes, dans laquelle ledit dispositif de transport (100) comprend une pluralité de premières et secondes unités de distribution (131a, 131b) positionnées dans la station de prélèvement (10) et configurées pour adopter au moins une position de prélèvement, dans laquelle lesdites unités de distribution (131a, 131b) saisissent des contenants à usage unique (C) respectifs positionnés dans les logements (121) du dispositif de transport (100), et une position de libération dans laquelle lesdites première et seconde unités de distribution (131a, 131b) délivrent les contenants à usage unique (C) respectivement auxdites première et seconde unités de préhension (205a, 205b).

9. Unité de transfert (1) selon la revendication 8, dans laquelle chaque logement (121) du dispositif de transport (100) est défini au moins partiellement par un trou (122) réalisé sur une surface mobile (105) du dispositif de transport (100), et dans laquelle lesdites unités de distribution (131a, 131b) peuvent être déplacées à travers des trous respectifs (122) entre une position désengagée, dans laquelle les unités de distribution (131a, 131b) se désengagent dudit trou (122), et lesdites positions de préhension et de libération.

10. Unité de transfert (1) selon l'une quelconque des revendications précédentes, dans laquelle ledit dispositif de transport (100) comporte une pluralité de modules (110) positionnés en succession le long d'un parcours d'alimentation fermé, chaque module (110) comportant une pluralité de logements (121) positionnés le long d'une première et d'une seconde rangée de logements (F1, F2) sensiblement parallèles audit axe de rotation (R), ladite première rangée de logements (F1) ayant un nombre de logements (121) égal au nombre de premières unités de préhension (205a) et la seconde rangée de logements (F2) ayant un nombre de logements (121) égal à la somme du nombre de premières unités de préhension (205a) et de secondes unités de préhension (205b).

11. Machine d'emballage pour des contenants à usage unique contenant une dose de préparation alimentaire, ladite machine comprenant :
- une unité de transfert (1) selon l'une quelconque des revendications 1 à 10 ;
- un élément de réception (300), configuré pour recevoir une pluralité de contenants à usage unique (C) provenant des unités de préhension (205a, 205b) de l'unité de transfert (1) ;
dans laquelle ledit élément de réception (300) comprend un corps de réception (301) ayant une pluralité de poches (302), chacune conçue pour loger un contenant à usage unique respectif (C) et ayant, sur sa paroi inférieure, au moins un trou d'aspiration (304) pouvant être relié à une source de pression pneumatique négative.

12. Procédé de transfert de contenants à usage unique contenant une dose de préparation alimentaire, ledit procédé comprenant les étapes suivantes :
- préparer une première pluralité de contenants à usage unique (C1) dans des premiers logements respectifs (121a) d'un dispositif de transport (100) et une seconde pluralité de contenants à usage unique (C2) dans des seconds logements respectifs (121b) dudit dispositif de transport (100) ;
- amener lesdites première et seconde pluralités de contenants à usage unique (C1, C2) le long d'une direction de transport au moyen dudit dispositif de transport (100) à une station de prélèvement (10) ;
- transférer la première et la deuxième pluralité de contenants à usage unique (C1, C2) de la station de prélèvement (10) à une station de libération (12) par un mouvement de rotation autour d'un axe de rotation (R), de manière à positionner la première et la deuxième pluralité de contenants à usage unique (C1, C2) dans la station de libération (12) selon une disposition prédéterminée ;
dans lequel ladite étape de transfert est effectuée au moyen d'un moyen de transfert (200) pouvant tourner autour dudit axe de rotation (R) et ayant des premières unités de préhension (205a) et des secondes unités de préhension (205b), chaque unité de préhension desdites premières unités de préhension (205a) étant positionnée en alternance avec une seconde unité de préhension respective desdites secondes unités de préhension (205b), lesdites premières et secondes unités de préhension (205a; 205b) étant positionnées le long d'un axe commun parallèle à l'axe de rotation (R) ; et le procédé étant **caractérisé en ce que** ladite étape de transfert comprend une sous-étape de déplacement mutuel desdites première et seconde pluralités de contenants à usage unique (C1, C2) autour dudit axe de rotation (R) de manière à faire varier une distance angulaire entre les première et seconde pluralités de contenants à usage unique (C1, C2) par rapport à l'axe de rotation (R).

13. Procédé selon la revendication 12, dans lequel chaque contenant à usage unique (C1, C2) a un axe de symétrie (S), ledit procédé comprenant une étape de modifier l'orientation de chaque contenant à usage unique de ladite première et/ou deuxième pluralité (C1, C2) par rotation du contenant à usage unique (C1, C2) autour d'un axe d'orientation (O) qui est transversal, de préférence perpendiculaire, par rapport à l'axe de symétrie (S) du contenant à usage unique (C1, C2), ledit axe d'orientation (O) passant par ledit contenant à usage unique (C1, C2).

14. Procédé selon la revendication 13, dans lequel ladite étape de modification de la disposition de chaque contenant à usage unique (C1, C2) est effectuée au niveau de la station de prélèvement (10) et/ou pendant le transfert des contenants à usage unique (C1, C2) de la station de prélèvement (10) à la station de libération (12) et/ou au niveau de la station de libération (12).

15. Procédé selon la revendication 13 ou 14, dans lequel ladite étape de modification de l'orientation de chaque contenant à usage unique (C1, C2) est réalisée en faisant tourner la première pluralité de contenants à usage unique (C1) dans la direction opposée par rapport à la seconde pluralité de contenants à usage unique (C2).
